(19) Europäisches Patentamt / European Patent Office / Office européen des brevets

(11) **EP 3 300 571 B1**

(12) **EUROPÄISCHE PATENTSCHRIFT**

(45) Veröffentlichungstag und Bekanntmachung des Hinweises auf die Patenterteilung:
**27.05.2020  Patentblatt 2020/22**

(51) Int Cl.:
**A01C 15/00** *(2006.01)*    *A01C 21/00* *(2006.01)*

(21) Anmeldenummer: **17191324.7**

(22) Anmeldetag: **15.09.2017**

(54) **VERFAHREN ZUR BERECHNUNG OPTIMIERTER FÜLLMENGEN FÜR EINE MASCHINE ZUR AUSBRINGUNG VON LANDWIRTSCHAFTLICHEM MATERIAL UND ZUR ERSTELLUNG EINES OPTIMIERTEN WEGPLANES**

METHOD FOR CALCULATING OPTIMIZED FILL QUANTITIES FOR A MACHINE FOR THE APPLICATION OF AGRICULTURAL MATERIAL AND FOR CREATING AN OPTIMIZED ROUTE PLAN

DISPOSITIF DE CALCUL OPTIMISÉ DE MASSES DE REMPLISSAGE POUR UNE MACHINE DESTINÉE À L'APPLICATION DU MATÉRIEL AGRICOLE ET D'ÉTABLISSEMENT OPTIMISÉ DU PLAN DE PARCOURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2016   DE 102016218860**

(43) Veröffentlichungstag der Anmeldung:
**04.04.2018   Patentblatt 2018/14**

(73) Patentinhaber: **Deere & Company**
**Moline, IL 61265 (US)**

(72) Erfinder:
• **Gresch, Valentin**
  **68163 Mannheim (DE)**
• **Kremmer, Martin**
  **68163 Mannheim (DE)**

(74) Vertreter: **Holst, Sönke**
**John Deere GmbH & Co. KG**
**Mannheim Regional Center**
**Global Intellectual Property Services**
**John-Deere-Strasse 70**
**68163 Mannheim (DE)**

(56) Entgegenhaltungen:
**EP-A1- 2 931 018     US-A1- 2016 095 274**

**Beschreibung**

Die Erfindung betrifft ein Verfahren zur Erstellung eines optimierten Wegplanes für eine Maschine zur Ausbringung von landwirtschaftlichem Material sowie ein entsprechendes Daten verarbeitungssystem.

Stand der Technik

Sämaschinen dienen dazu, Saatgut auf einem Feld auszusäen. Sie umfassen einen Saatgutbehälter, einen Furchenöffner, Mittel zum sukzessiven Zuführen von Saatgutkörnern in die vom Furchenöffner erstellte Furche und ein Schließrad zum Schließen der Furche. In den Saatgutbehälter sollte möglichst genau so viel Saatgut gefüllt werden, wie zum Säen eines Arbeitsauftrages z.B. für ein oder mehrere Felder erforderlich ist. Sollte zu viel Saatgut eingefüllt werden, muss es mühsam wieder aus dem Saatgutbehälter entnommen werden, jedenfalls wenn anschließend anderes Saatgut ausgebracht werden soll. Kritischer ist, wenn zu wenig Saatgut vorhanden ist, denn dann wird schlimmstenfalls ein Teil des Feldes nicht besät oder zumindest muss der Sävorgang, wenn das fehlende Saatgut mittels eines Sensors (vgl. US 6 070 539 A1) erkannt wurde, unterbrochen werden und kann erst nach Auffüllen des Saatgutbehälters fortgesetzt werden.

Im Stand der Technik wurde vorgeschlagen, die benötigte Füllmenge für einen Saatgutbehälter einer Sämaschine anhand der Fläche des Feldes und der Anzahl der Körner je Flächeneinheit zu berechnen, wozu ein Programm auf einem tragbaren Rechner verwendet werden kann (vgl. http://www.landapps.de/app_html?app id=134 ). Anhand des Tausendkorngewichts wird die benötigte Masse an Saatgut berechnet. Diese Berechnung geht von einer konstanten Anzahl an Körnern je Fläche aus.

Weiterhin wurde vorgeschlagen (DE 195 32 870 A1), einen Wegplan für eine Sämaschine über ein Feld zu erstellen und unter Berücksichtigung einer standortsspezifischen Vorausplanung der Aussaatmengen zu berechnen, an welcher Stelle der Vorratsbehälter sinnvollerweise auf dem Feld aufgefüllt werden kann, um Leer- und Doppelfahrten auf dem Feld zu vermeiden. Eine ähnliche Planung eines Weges einer Sämaschine und ihrer Auffüllpositionen, jedoch ohne Berücksichtigung standortsspezifisch geplanter Aussaatmengen, wird in der DE 196 29 618 A1 beschrieben. Die DE 10 2011 050 885 A1 schlägt vor, anhand des eingegebenen oder sensorisch erfassten Füllstandes eines einzigen Behälters der Maschine den verfügbaren Weg zu berechnen, der mit der Maschine anhand einer bekannten Wegplanung noch zurückgelegt werden kann, und bei Bedarf die Ausbringrate und ggf. Nachfüllposition im Sinne einer Zeitersparnis zu optimieren.

In der US 2016/0095274 A1 wird vorgeschlagen, anhand eines geplanten Weges, der beispielsweise in parallelen Bahnen über ein Feld oder mit anfänglichem Umfahren des Feldes erfolgen kann, und der zugehörigen Ausbringmengen an Saatgut einen einer Reiheneinheit zugeordneten Behälter einer Sämaschine selbsttätig mit der jeweils nötigen Saatgutmenge zu befüllen, die aus einem großen Saatgutbehälter entnommen wird.

Die WO 2014/093575 A1 beschreibt eine weitere Sämaschine mit mehreren Saatgutbehältern und einer Wegplanung, die berücksichtigt, welche Pflanzensorte an welchen Stellen eines Felds gesät werden soll.

Aufgabe

Im erwähnten Stand der Technik nach dem erwähnten Programm und DE 195 32 870 A1 ist die Sämaschine mit einem einzigen Behälter versehen, aus dem das Saatgut entnommen wird. Die Berechnung der notwendigen Füllmenge ist demnach relativ einfach, indem man die Fläche des Feldes mit einer konstanten (bei dem erwähnten Programm) oder variablen (bei DE 195 32 870 A1) Anzahl an Körnern je Fläche multipliziert bzw. hochintegriert.

Es sind jedoch auch Sämaschinen, insbesondere Einzelkornsämaschinen, gebräuchlich, die mit mehreren seitlich nebeneinander angeordneten Säeinheiten ausgestattet sind, denen jeweils ein separater Saatgutbehälter zugeordnet ist (vgl. DE 10 2014 223 843 A1). Bei derartigen Sämaschinen sind Anwendungsfälle denkbar, bei denen ein bestimmter Saatgutbehälter bei gleichbleibenden Saatgutablageabständen einen wesentlich weiteren Weg zurücklegt (z.B. beim Befahren von Kurven) und/oder je zurückgelegter Strecke wesentlich mehr Saatgut abgibt (z.B. beim Abschalten von Teilbreiten aufgrund der Form des Feldes oder aufgrund über die Breite der Sämaschine abweichenden Aussaatmengen) als ein anderer Saatgutbehälter und daher mehr Saatgut abgeben muss als die anderen Saatgutbehälter. Die bisherigen Methoden zur Berechnung der notwendigen Füllmenge können diese Einflüsse jedoch nicht berücksichtigen, was entweder zu vorzeitig leeren Behältern oder nach der Arbeit noch darin befindlichem Saatgut führt. Ein ähnliches Problem ergibt sich, wenn eine Maschine anderes landwirtschaftliches Material, wie Dünge- oder Pflanzenschutzmittel aus mehreren, über ihre Breite verteilten Behältern auf ein Feld ausgibt.

Bei den aus DE 196 29 618 A1, US 2016/0095274 A1 und WO 2014/093575 A1 bekannten Verfahren zur Planung eines Weges einer Maschine zum Ausbringen von Materialien über ein Feld ist das erwähnte Problem nicht berücksichtigt, dass sich - bei ungeschickter Wegplanung - die Behälter unterschiedlich schnell leeren können, was die Wegstrecke zwischen Auffüllvorgängen begrenzt.

Der vorliegenden Erfindung liegt die Aufgabe zu Grunde, das erwähnte Problem zumindest teilweise zu lösen.

## Lösung

Dieses Problem wird erfindungsgemäß durch die Lehre der Patentansprüche 1 und 4 gelöst, wobei in den weiteren Patentansprüchen Merkmale aufgeführt sind, die die Lösung in vorteilhafter Weise weiterentwickeln.

Zur Erläuterung wird zunächst ein nicht erfindungsgemäßes Verfahren zur Berechnung optimierter Füllmengen für nebeneinander angeordnete, jeweils mit einer Ausbringeinheit für das Material versehene Behälter einer Maschine zur Ausbringung von landwirtschaftlichem Material beschrieben, das folgende, unter Verwendung eines Datenverarbeitungssystems durchgeführte Schritte umfasst:

> Erstellen eines Wegplanes für die Maschine zur Ausbringung des landwirtschaftlichen Materials auf einer landwirtschaftlichen Fläche,
> Eingeben oder Berechnen der auszubringenden, konstanten oder standortspezifisch variablen Menge an Material je Flächen- oder Längeneinheit,
> und Aufsummieren der auszubringenden Menge an Material entlang der im Wegplan für die einzelnen Behälter vorgesehenen Wege für jeden Behälter zur Berechnung und Ausgabe der jeweils einzufüllenden Füllmengen.

Mit anderen Worten wird mittels des Datenverarbeitungssystems, bei dem es sich um einen Bordcomputer der Maschine oder eines sie ziehenden Fahrzeugs oder einen separaten, tragbaren oder ortsfesten Rechner, z.B. ein Smartphone oder eine Datenuhr oder -brille oder einen Tablet- oder Laptopcomputer oder einen (Hof-) Desktopcomputer handeln kann, ein Wegplan erstellt, entlang welchem die Maschine bewegt werden und dabei das landwirtschaftliche Material (Saatgut, Dünger, Chemikalien, etc.) auf die landwirtschaftliche Fläche ausbringen kann. Hierbei kann auf übliche Techniken zur Wegplanung zurückgegriffen werden, wozu beispielsweise auf die DE 196 29 618 A1, EP 1 522 823 A1 oder die Dissertation von Timo Oksanen vom Dezember 2007, zugänglich unter http://lib.tkk.fi/Diss/2007/isbn-9789512290802/isbn9789512290802.pdf verwiesen sei, oder es wird bei einer einfachen Ausführungsform anfangs das Feld umfahren, während die Positionen durch ein satellitengestütztes Positionsbestimmungssystem erfasst und aufgezeichnet werden und anschließend wird durch Abfahren oder Bedienereingabe ein erster Weg über das Feld (insbesondere an dessen Rand) festgelegt und die folgenden Wege parallel zum ersten Weg verlaufend definiert werden. Außerdem wird in das Datenverarbeitungssystem durch einen Bediener eingegeben oder durch dieses anhand die landwirtschaftliche Fläche charakterisierender Daten berechnet, wie viel Material je Längen- oder Flächeneinheit auszubringen ist. Diese Menge kann über die Fläche konstant sein oder (z.B. wie in der DE 195 32 870 A1 erwähnt) standortspezifisch variieren, z.B. abhängig von der Bodenart oder Bodenfeuchte oder anderen ortsspezifischen Daten, wie Topographie etc. Der Wegplan sieht unterschiedliche Wege für die einzelnen, seitlich gegeneinander versetzten Behälter vor. Die Wege können unterschiedlich lang sein, denn ein kurvenäußerer Behälter legt einen längeren Weg zurück als ein kurveninnerer Behälter, und die zugehörigen Materialmengen können sich unterscheiden, einerseits bei über die Breite der Maschine sich standortspezifisch unterscheidenden Ausbringmengen und andererseits dann, wenn Teilbreiten der Maschine abgeschaltet werden, z.B. bei nichtorthogonalem Einfahren in ein Vorgewende oder bei dreieckförmigen Bereichen eines Feldes. Es ist somit durchaus möglich, dass die Behälter unterschiedlich viel Material ausgeben müssen. Dieser Sachverhalt wird gemäß der vorliegenden Erfindung durch ein Aufsummieren der auszubringenden Menge an Material entlang der im Wegplan für die einzelnen Behälter vorgesehenen Wege für jeden Behälter berücksichtigt. Somit werden exakte jeweils einzufüllende Füllmengen bestimmt und ausgegeben. Die Behälter können somit mit der geeigneten Füllmenge befüllt und der Ausbringvorgang durchgeführt werden.

Auf diese Weise gibt man einem Bediener oder einer selbsttätigen Befülleinrichtung des Behälters die Möglichkeit, nur so viel Material in den Behälter einzufüllen, wie auch nur benötigt wird. Es ist weder mit vorzeitiger Erschöpfung des Vorrats des Behälters noch mit nach dem Ende des Ausbringvorgangs im Behälter vorhandenem Material zu rechnen. Sollte die Maschine mehrere Behälter mit Material und Mittel zur wahlweisen Zufuhr des Materials aus einem der Behälter zu einer Ausbringeinheit aufweisen, um beispielsweise an unterschiedlichen Stellen des Feldes unterschiedliches Saatgut ausbringen zu können (s. US 6 070 539 A1 oder US 20150059630 A1), wird diese Berechnung vorzugsweise für jeden Behälter getrennt durchgeführt.

Vorzugsweise sind eine Messung der tatsächlichen Füllmenge im Behälter durch einen Sensor, ein Vergleich mit der einzufüllenden Füllmenge und eine Ausgabe eines vom Ergebnis des Vergleichs abhängigen Signalwerts vorgesehen, um einem Bediener das Einfüllen zu erleichtern. Der Sensor kann ein Füllstandsensor des Behälters sein, der als Gewichtssensor oder als Höhensensor ausgeführt ist, oder ein separater Sensor, z.B. eine (Stereo-) Kamera eines Mobiltelefons (Smartphone), auf dem auch die Berechnung der benötigten Materialmenge erfolgen kann.

Gemäß der vorliegenden Erfindung wird ein Verfahren zur Erstellung eines optimierten Wegplanes für eine Maschine zur Ausbringung von landwirtschaftlichem Material, die nebeneinander angeordnete, jeweils mit einer Ausbringeinheit für das Material versehene Behälter umfasst, mit folgenden, unter Verwendung eines Datenverarbeitungssystems durchgeführten Schritten vorgeschlagen:

Eingeben von Daten hinsichtlich einer landwirtschaftlichen Fläche, auf welcher das Material auszubringen ist, in das Datenverarbeitungssystem, Eingeben oder Berechnen der auszubringenden, konstanten oder standortspezifisch variablen Menge an Material je Flächen- oder Längeneinheit, Berechnen eines im Sinne einer Vergleichmäßigung der aus den einzelnen Behältern zu entnehmenden Mengen an Material optimierten Wegplanes für die Maschine zur Ausbringung des landwirtschaftlichen Materials auf der landwirtschaftlichen Fläche.

Es werden demnach in das Datenverarbeitungssystem, zu dessen technischer Ausführung auf die obigen Ausführungen zum oben beschriebenen Verfahren zur Berechnung optimierter Füllmengen verwiesen wird, Daten hinsichtlich der mit Material zu beaufschlagenden landwirtschaftlichen Fläche eingegeben, z.B. hinsichtlich der Grenzen dieser Fläche und ggf. eventueller, nicht zu beaufschlagender Teilbereiche. Analog zu der oben hinsichtlich des oben beschriebenen Verfahrens zur Berechnung optimierter Füllmengen diskutierten Vorgehensweise wird eingegeben oder berechnet, wie viel Material je Flächen- oder Längeneinheit auf das Feld auszubringen ist. Diese Menge kann für die Fläche konstant sein oder, wie oben hinsichtlich des Verfahrens zur Berechnung optimierter Füllmengen diskutiert, standortspezifisch variieren. Dem Datenverarbeitungssystem liegen somit Informationen über die Grenzen der Fläche und über die auszubringenden Materialmengen vor. Bei der Wegplanung, zu der grundsätzlich ebenfalls auf die Ausführungen zum Verfahren zur Berechnung optimierter Füllmengen verwiesen sei, wird gemäß der im Anspruch 1 definierten Erfindung ein Optimierungskriterium berücksichtigt, das dazu führt, dass ein Wegplan erstellt wird, bei dem aus allen Behältern der Maschine möglichst gleich viel Material (Saatgut, Dünger, Chemikalien, etc.) entnommen wird. Mit anderen Worten wird der von der Maschine abzufahrende Weg derart gelegt, dass auf gewissen Teilen des Wegs aus einem bestimmten Behälter mehr Material als aus einem oder mehreren, anderen Behältern entnommen wird und dieser Unterschied aber auf anderen Teilen des Weges wieder ausgeglichen wird. Der Wegplan kann schließlich durch die Maschine abgearbeitet werden.

Auf diese Weise erreicht man, dass der mit der Maschine zurücklegbare Weg auf dem Feld größer als im Stand der Technik sein kann, da der Weg nicht mehr durch die Kapazität des Behälters begrenzt sein muss, aus dem die größten Materialmengen auszubringen sind.

Die aus den einzelnen Behältern zu entnehmenden Mengen an Material können anhand der im Wegplan für die einzelnen Behälter vorgesehenen Wege und zugehörigen Menge an Material je Flächen- oder Längeneinheit für jeden Behälter für unterschiedliche Kandidatenwege berechnet werden und schließlich ein optimaler Kandidatenweg ausgewählt werden. Auch hier kann, wenn einer Ausbringeinheit mehrere Behälter zugeordnet sind, zwischen denen eine Umschaltung erfolgt, die Berechnung für jeden Behälter erfolgen.

Für den Fall, dass die Kapazität der Behälter nicht ausreicht, um die gesamte landwirtschaftliche Fläche ohne Nachfüllen mit Material zu beaufschlagen, kann ein Schritt des Berechnens einer optimalen Auffüllposition und/oder eines optimalen Auffüllzeitpunktes durchgeführt werden. Diese Position kann beispielsweise am Rand eines Feldes liegen, der mit einem Nachfüllfahrzeug gut zu erreichen ist. Der Auffüllzeitpunkt kann an einen für den Bediener günstigen Zeitpunkt gelegt werden, beispielsweise zu Beginn oder Ende einer Mittagspause.

Ausführungsbeispiel

In den Zeichnungen ist ein nachfolgend näher beschriebenes Ausführungsbeispiel der Erfindung dargestellt. Es zeigt:

Fig. 1      eine Draufsicht auf eine Maschine zur Ausbringung von landwirtschaftlichem Material, die von einem Zugfahrzeug gezogen wird,

Fig. 2      eine seitliche Ansicht einer Reiheneinheit der Maschine,

Fig. 3      eine Draufsicht auf ein Feld mit einem ersten Wegplan für die Maschine, und

Fig. 4      eine Draufsicht auf das Feld mit einem zweiten, optimierten Wegplan für die Maschine.

Maschine zur Ausbringung von landwirtschaftlichem Material und Zugfahrzeug

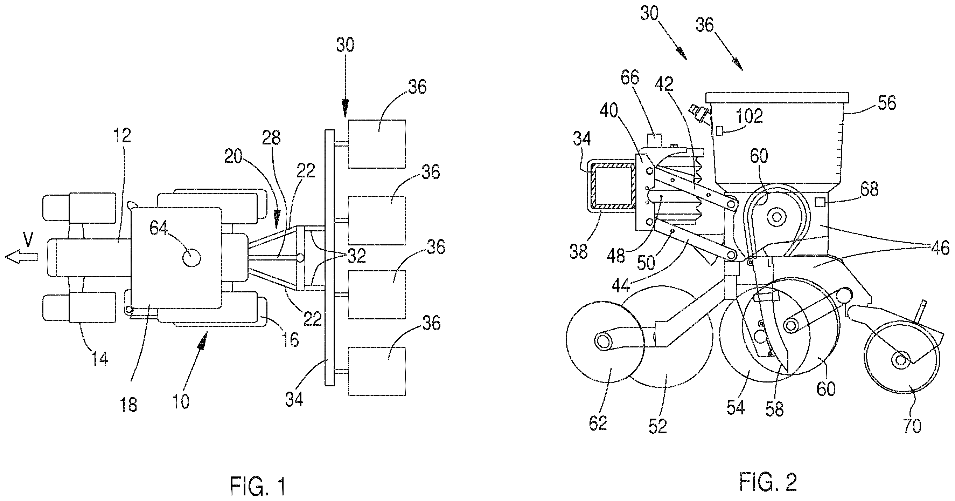

In der Figur 1 ist ein Zugfahrzeug 10 in Form eines Ackerschleppers dargestellt, der sich auf einem Fahrgestell 12 aufbaut und durch vordere, lenkbare Räder 14 und antreibbare, rückwärtige Räder 16 auf dem Boden abstützt. Ein Bedienerarbeitsplatz befindet sich in einer Kabine 18. Am rückwärtigen Ende des Fahrgestells 12 ist eine Dreipunktkupplung 20 angeordnet, die sich aus zwei nebeneinander angeordneten Unterlenkern 22 und einem darüber angebrachten Oberlenker 28 zusammensetzt.

Eine Maschine 30 zur Ausbringung von landwirtschaftlichem Material, bei der es sich um eine Sämaschine handelt, umfasst ein Haltegestell 32, das an den rückwärtigen Enden der Unterlenker 22 und der Oberlenker 28 lösbar angebracht ist. An dem Haltegestell 32 ist ein Querträger 34 befestigt, der sich über die ganze Breite der Maschine 30 erstreckt und an dem seitlich nebeneinander in der dargestellten Ausführungsform vier Reiheneinheiten 36 befestigt sind.

Es wird nun auf die Figur 2 verwiesen. Die Befestigung der Reiheneinheiten 36 am Querträger 34 erfolgt über U-förmige Halterungen 38, die mit einer Konsole 40 verbunden sind, die sich vertikal an der Rückseite des Querträgers 34 erstreckt und an der übereinander zwei Lenker 42, 44 angelenkt sind, die außerdem jeweils an einem Gestell 46 der Reiheneinheit 36 angelenkt sind. Die Lenker 42, 44 bilden mit der Konsole 40 und dem Gestell 46 ein verstellbares Parallelogramm, das die Höhe des Gestells 46 über dem Boden definiert. Ein pneumatischer Aktor 48 greift einerseits oben an der Konsole 40 und andererseits unten an einer Lagerstelle 50 am unteren Lenker 44 an und definiert die Position des Gestells 46 und die Andruckkraft, mit der am Gestell 46 abgestützte Furchenöffner 52, 54 mit dem Erdboden zusammenwirken.

Das Gestell 46 trägt in an sich bekannter Weise einen Behälter 56 für auszubringendes Material (hier: Saatgut), ein Särohr 58 sowie eine (insbesondere pneumatische, mit von einem nicht gezeigten Gebläse bereitgestellten Unterdruck arbeitende) Zumesseinrichtung 60, die nach und nach einzelne Körner des Saatguts aus dem Behälter 56 in das Särohr 58 abgibt, welches es in eine Furche ablegt, die durch den Furchenöffner 54 erzeugt wird, dessen Arbeitstiefe durch ein Tiefeneinstellrad 60 vorgegeben wird. Die Furche wird durch ein Schließrad 70 geschlossen. Eine weitere Furche kann durch den Furchenöffner 52 erzeugt werden, dessen Arbeitstiefe durch ein Tiefeneinstellrad 62 vorgegeben wird. Diese weitere Furche kann zur Aufnahme von Düngemitteln durch ein weiteres, nicht gezeigtes Rohr dienen und ebenfalls durch das Schließrad 70 geschlossen werden. Hinsichtlich weiterer Einzelheiten der Reiheneinheiten 36 wird auf die Offenbarung der EP 2 517 545 A1 verwiesen, deren Offenbarung durch Verweis mit in die vorliegenden Unterlagen aufgenommen wird. Die Maschine 36 könnte auch auf Rädern abgestützt sein und an einer Deichsel hinter dem Ackerschlepper 10 hergezogen werden, anstelle der gezeigten Befestigung an der Dreipunktkupplung 20. Die Maschine 36 stellt ein Beispiel einer Maschine zum Ausbringen von landwirtschaftlichem Material dar und könnte in einer anderen Ausführungsform auch junge Pflanzen oder Sämlinge oder Düngemittel oder andere Chemikalien ausbringen.

Eine Antenne eines Positionsbestimmungssystems 64 ist auf dem Dach der Kabine 18 angebracht und empfängt Signale von Satelliten z.B. des GPS, Galileo- und/oder Glonass-Systems, um ihre Position zu bestimmen. Die Positionsdaten werden durch das Positionsbestimmungssystem 64 einer Steuerung 66 zugeführt, die wiederum mit Aktoren 68 der Reiheneinheiten 36 verbunden ist, welche durch die Steuerung 66 aktiviert werden können, jeweils ein Saatgutpartikel in den Boden abzugeben. Das Positionsbestimmungssystem 64 könnte alternativ auf der Sämaschine 36 angebracht sein, und die Steuerung 66 an Bord des Zugfahrzeugs 10.

Berechnung des Sollfüllstands der Behälter

Die Behälter 56 sind zweckmäßigerweise genau mit so viel Material zu befüllen, dass ein bestimmter Arbeitsauftrag abgearbeitet werden kann, aber anschließend nur noch möglichst wenig Material enthalten ist. Hierbei ist der Tatsache Rechnung zu tragen, dass bei gewissen Anwendungsfällen, wie sie unten beschrieben werden, mehr Material aus einem bestimmten Behälter 56 entnommen werden muss als aus einem oder mehreren, anderen Behältern 56.

Es wird daher eine Einrichtung und ein Verfahren zur Ermittlung des Sollfüllstands der Behälter 56 der Reiheneinheiten 36 der Maschine 30 beschrieben. Zudem wird ein Verfahren zur Berechnung eines Sollweges der Maschine 30 beschrieben, welcher dahingehend optimiert ist, dass ein gleichmäßiger Sollfüllstand aller auf der Maschine vorhandenen Behälter 36 an Material (Produktionsmittel) erreicht wird. Als Füllstand ist dabei ein durch das Material eingenommenes Volumen, eine Masse oder auch eine produktionsmittelspezifische Kenngröße wie z.B. Anzahl Saatkörner zu verstehen.

Die Behälter 56 der Maschine können separat (einzeln) befüllt werden und enthalten vorzugsweise eine volumetrische Füllstandsanzeige, beispielsweise ausgeführt als seitliche Markierung 72 innerhalt des Saatgutbehälters. Die Behälter 56 können optional werkzeuglos abnehmbar ausgeführt sein, um Saatgutreste zu entleeren, und/oder eine nach unten führende Öffnung enthalten, um Saatgutreste zu entleeren. Der Saatgutbehälter kann optional eine Einrichtung zur Messung des aktuellen Füllstands enthalten, die als Gewichts- oder den Füllstand erfassender Sensor ausgeführt sein kann.

Die Maschine 30 kann derart ausgeführt sein, dass sie in Kurvenfahrten die Ausbringmenge an Saatgut so anpasst, dass eine gleichmäßige Pflanzenpopulation erreicht wird. Dies kann geschehen, indem bei mechanisch angetriebenen Säeinheiten jede Zumesseinrichtung 60 einzeln oder eine Teilmenge der Zumesseinrichtungen 60 zusammen mechanisch z.B. über ein auf dem Boden mitlaufendes Rad angetrieben werden. Bei elektrisch angetriebenen Zumesseinrichtungen 60 geschieht dies, indem die Zumesseinrichtungen 60 unter Zuhilfenahme z.B. der Drehrate der Maschine 30 um die vertikale Achse einzeln geregelt werden, so dass die Ausbringmenge der tatsächlichen Vorfahrtsgeschwindigkeit angepasst wird. Es wird somit erreicht, dass der Abstand aufeinander folgender Abgabepunkte von Saatgut auch in Kurven konstant ist.

Die Maschine ist zudem vorzugsweise mit einer Teilbreiten- oder Einzelreihenschaltung ausgestattet, welche es erlaubt, Zumesseinrichtungen 60 einzeln ab- oder zuzuschalten um eine Überlappung am Vorgewende oder im Feld zu verhindern (vgl. DE 42 23 585 A1).

Die Steuerung 66 ist mit einem Prozessor und einem Speicher zur Berechnung des Sollfüllstandes des Saatgutbehälter und/oder des Sollweges der Arbeitsmaschine ausgestattet, obwohl diese Berechnung auch mittels eines separaten Rechners ausgeführt werden könnte, bei dem es sich um ein tragbares Gerät oder einen stationären Rechner, z.B. einen Hof-Computer handeln könnte. Im Speicher der Steuerung sind die georeferenzierten Feldgrenzen sowie der sich daraus nach einem an sich bekannten Wegplanungsvorgang ergebende, vorgesehene Wegplan hinterlegt, sowie zugehörige Zielpopulationen (Anzahl Pflanzen pro Fläche). Auch sind dort Parameter der Maschine (z.B. Anzahl der Reiheneinheiten 36, Reihenabstand zwischen den einzelnen Reiheneinheiten 36, gesamte Arbeitsbreite der Maschine 30) hinterlegt, die zur Erstellung des Wegplanes benötigt werden. Die Steuerung 66 ist zudem mit einer Anzeigeeinrichtung zur Anzeige des Sollfüllstands und/oder des vorgeschlagenen Sollweges versehen, und mit einer Bedieneinheit, die z.B. als berührungsempfindliche Oberfläche der Anzeigeeinrichtung ausgeführt sein kann, mittels welcher der Bediener Feldgrenzen, Feldzonen, Zielpopulationen oder den gewünschten Wegplan eingeben kann. Die Steuerung kann zudem mit einer Anzeige zur Indikation beim Befüllen des Behälters ausgestattet sein, die wiedergibt, wenn die Sollfüllmenge des Behälters 56 erreicht ist. Die Anzeige kann als Statusleuchte an den Reiheneinheiten 36 oder als Anzeige auf einem beabstandeten Display (z.B. eines Smartphones) ausgeführt sein.

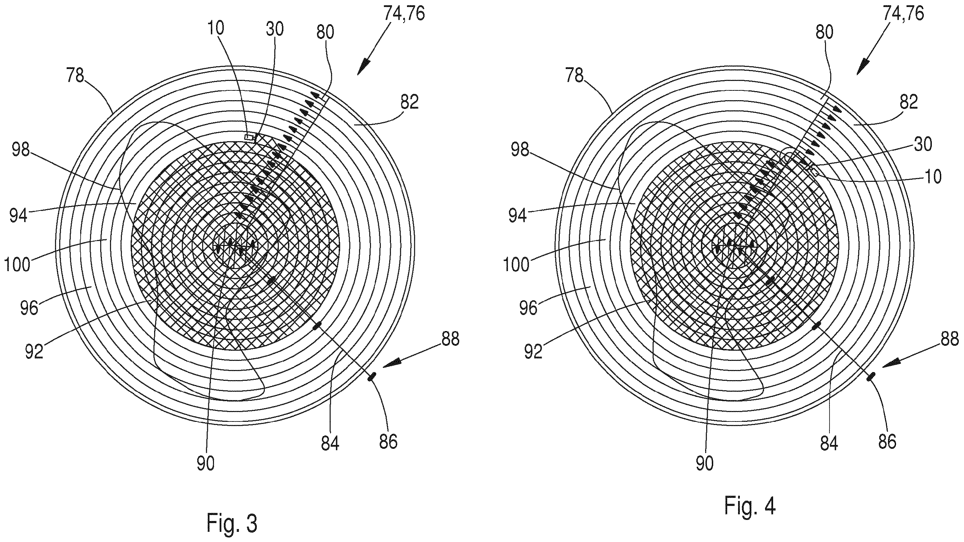

Die Figur 3 zeigt schematisch ein kreisrundes Feld 74 als Beispiel für eine landwirtschaftliche Fläche 76, auf welcher Material auszubringen ist, mit typischen, nicht optimierten Wegen der von einem Zugfahrzeug 10 gezogenen Maschine 30. Eine solche Feldgeometrie ist für Felder 74 mit Kreisbewässerung typisch und wird hier beispielhaft zur Darstellung der Erfindung herangezogen. Die hier dargelegten Merkmale der Erfindung lassen sich aber sinngemäß auf andere Feldgeometrien übertragen.

Die landwirtschaftliche Fläche 76 umfasst eine kreisförmige Feldgrenze 78, innerhalb derer (virtuelle) Kreisbahnen 82 liegen, die jeweils einer Arbeitsbreite der Maschine 30 entsprechen und in durch Pfeile 80 gekennzeichnete Fahrtrichtungen befahren werden. Die Fläche 76 wird durch ein Kreisbewässerungssystem 88 bewässert, das einen Träger 84 mit Sprühdüsen aufweist, der durch einen Antrieb 86 um einen mittigen Drehpunkt 90 rotierbar ist, an dem sich eine Pumpe zur Wasserzufuhr befindet. Die Fläche 76 wurde gemäß der Figur 3 bereits im mittigen Bereich 92 durch die Maschine 30 mit Material (Saatgut) versehen, während ein unbearbeiteter Bereich 100 im radial äußeren Bereich 96 der Fläche 76 in der Figur 3 liegt. Die Fläche 76 hat eine erste Feldzone 94 und eine zweite Feldzone 96, die durch eine unregelmäßige Grenze 98 voneinander getrennt sind. Die Feldzonen 94 und 96 können beispielsweise durch unterschiedliche Bodenarten oder Bodenfeuchtigkeiten voneinander differieren. Die Feldzonen 94, 96 können mit unterschiedlichen Saatgutdichten besät werden.

Zur Berechnung des Sollfüllstandes der Behälter 56 wird der vordefinierte Weg der Maschine 30 als Grundlage genommen. Dabei wird zwischen Wegabschnitten, auf denen Saatgut ausgebracht wird und Wegabschnitten unterschieden, bei denen Wendemanöver ausgeführt werden oder die Maschine 30 ohne Säen über das Feld bewegt wird, was zum Erreichen der Mitte des Feldes und der dort vorgesehenen, parallel verlaufenden Wegabschnitte erforderlich ist. Die vorgesehenen Wege werden unter Berücksichtigung der Anzahl der Reiheneinheiten 36 der Maschine 30 sowie deren lateralem Abstand zueinander (Reihenabstand) in Wege $s_i$ für jede einzelne Reiheneinheit 36 $i$ unterteilt. Die Wege werden zudem in m Segmente eingeteilt. Die Einteilung in Segmente erfolgt vorteilhaft für jeden einzelnen Weg separat unter Berücksichtigung der Feldzonen 94, 96 und der sich daraus ergebenden Flächendichten für das auszubringende Saatgut. Die Anzahl Segmente und der Rechenaufwand werden somit minimal gehalten.

Die von einer einzelnen Reiheneinheit 36 $i$ eingenommene Arbeitsbreite $b_i$ entspricht dem Reihenabstand der Maschine 30. Die in einem Segment m durch die Reiheneinheit 36 bearbeitete Fläche $A_{i,m}$ ergibt sich mit der Weglänge $s_{i,m}$ zu

$$A_{i,m} = s_{i,m} \cdot b_i.$$

Die Zielpopulation $n_{i,m}$ für die Fläche $A_{i,m}$ wird vom Bediener über die Bedieneinheit vorgegeben oder ist als Zielpopulation für eine georeferenzierte Feldzone 94, 96 festgelegt und im Speicher der Steuerung 66 hinterlegt. Die Anzahl Saatkörner $N_i$ für einen Weg $s_i$ wird durch die Summe aller Wegsegmente m bestimmt, wobei die Bearbeitungsfläche $A_{i,m}$ sowie Zielpopulation $n_{i,m}$ jedes Wegsegments miteinander verrechnet werden:

$$N_i = \sum_{m=1}^{x} N_{i,m} = \sum_{m=1}^{x} A_{i,m} \cdot n_{i,m}$$

Typische Zielpopulationen liegen beispielsweise bei der Aussaat von Mais zwischen 75.000 und 105.000 Saatkörnern pro Hektar Fläche. Wird als Füllstandsangabe nicht die Anzahl Saatkörner sondern beispielsweise die Masse oder das Volumen verwendet, so wird anhand bekannter oder kalibrierter Parameter wie Tausendkornmasse (Gewicht von 1000 Saatkörner) und Schüttgutdichte in die entsprechende Füllstandsangabe umgerechnet.

Die durch das Verfahren berechnete, zur Bearbeitung des Feldes benötigte Saatgutmenge (bzw. der errechnete Sollfüllstand) kann nun zur Befüllung der Saatgutbehälter genutzt werden. Dabei wird dem Bediener in vorteilhafter Weise eine Rückmeldung gegeben, wenn der Sollfüllstand erreicht ist. Dies kann über eine visuelle Anzeige, beispielsweise einer Statuslampe am Behälter 56 oder eine Indikation auf einem Smartphone oder Tablet geschehen. Auch eine akustische Anzeige durch einen Signalton vom Zugfahrzeug 10 oder ein Vibrationsalarm von einem Smartphone ist möglich. Eine Rückmeldung über den aktuellen Füllstand kann über eine Füllstandssensorik 102 der Behälter 56 erfolgen.

Kann mit der auf der Sämaschine verfügbaren Behälterkapazität nicht das ganze Feld bearbeitet werden, so nimmt das Steuergerät die Berechnung so vor, dass das Nachfüllen der Saatgutbehälter zeitlich bzw. örtlich sinnvoll gewählt wird. Hierzu kann der Bediener zusätzliche Randbedingungen (wie z.B. eine präferierte Stelle am Vorgewende wo die Saatgutsäcke bzw. ein Nachfüllwagen stehen oder eine Uhrzeit welche beispielsweise mit der Mittagspause übereinstimmt) vorgeben, die von der Software berücksichtigt werden. Bei kleinen Feldern die mit dem gleichen Saatgut bearbeitet werden sollen, können auch mehrere Felder mit definierten Wegen zu einem Gesamtweg verbunden werden.

Während des Aussaatvorgangs überwacht das Steuergerät die tatsächlich ausgebrachte Menge an Saatgut beispielsweise über einen an sich bekannten, reflektiven Saatgutsensor und vergleicht diese Menge mit der für den bisherigen Gesamtweg berechneten Sollmenge.

Größere Abweichungen werden dem Bediener über das Display angezeigt. Besteht eine systematische Diskrepanz zwischen berechneter und tatsächlicher Ausbringmenge, z.B. weil der Bediener die Feldbahnen in einer anderen Reihenfolge oder Richtung abgefahren ist, kann eine Neuberechnung der Wege angestoßen werden.

Optimierung des Wegplanes

Es wird nun ein Verfahren zur Berechnung eines Wegplanes für die Maschine 10 beschrieben, welcher dahingehend optimiert ist, dass ein (möglichst) gleichmäßiger Sollfüllstand aller auf der Maschine 30 vorhandenen Behälter 56 an auszubringendem Material erreicht wird. So wird beispielsweise das kreisrunde Feld der Figur 3 im Gegenuhrzeigersinn bearbeitet. Angenommen, das Feld hat eine Fläche von 30 ha und wird mit einer (Sä-) Maschine 30 mit 24 Reihen und 18,24 m Arbeitsbreite bearbeitet, so beträgt der Unterschied an ausgebrachtem Saatgut zwischen der innerstem und äußerstem Reiheneinheit 36 je nach Kreisbahn zwischen 47% (innerste Kreisbahn) und 6 % (äußerste Kreisbahn).

Die Figur 4 zeigt nun dasselbe Feld mit einer optimierten Wegplanung. Durch einen Wechsel der Fahrtrichtung zu einem geeigneten Zeitpunkt lässt sich so die gesamthaft ausgebrachte Materialmenge zwischen den Behältern 56 ausgleichen. Prozesstechnische Randbedingungen sind dabei im Speicher der Steuerung 66 hinterlegt und werden bei der Wegberechnung miteinbezogen. So wird beispielsweise erst nach Vollendung einer Kreisbahn 82 die Arbeitsrichtung gewechselt, so dass eine einfache Bearbeitung weiterhin gewährleistet wird. Die Berechnung des Sollwegs kann vor dem Start des Aussaatvorgangs vorgenommen werden (und anschließend können anhand des geplanten Sollwegs die Sollfüllstände der Behälter 56 berechnet werden) oder vor dem Arbeitsvorgang oder während des Arbeitsvorganges, basierend auf aktuell gemessenen Füllständen in den Behältern 56 durchgeführt werden.

Die Erstellung des Wegplans der Figur 4 kann ebenfalls anhand an sich bekannter Vorgehensweisen erfolgen, beispielsweise indem unterschiedliche Wegkandidaten berechnet (analog zu EP 1 522 823 A1 oder der Dissertation von Timo Oksanen vom Dezember 2007, zugänglich unter http://lib.tkk.fi/Diss/2007/-isbn9789512290802/isbn9789512290802.pdf) und schließlich ein anhand des Kriteriums der gleichmäßigen Saatgutentnahme aus allen Behältern 56 optimierter Wegplan daraus ausgewählt wird.

Wird der Sollweg für mehrere Felder berechnet, so können die Bearbeitungsreihenfolge der Felder, die Transportfahrten und eine den Feldern beabstandete Nachfüllstelle in die Sollpfadberechnung miteinbezogen werden.

**Patentansprüche**

1. Verfahren zur Erstellung eines optimierten Wegplanes für eine Maschine (30) zur Ausbringung von landwirtschaftlichem Material, die nebeneinander angeordnete, jeweils mit einer Ausbringeinheit für das Material versehene Behälter (56) umfasst, mit folgenden Schritten unter Verwendung eines Datenverarbeitungssystems:

   Eingeben von Daten hinsichtlich einer landwirtschaftlichen Fläche (76), auf welcher das Material auszubringen ist, in das Datenverarbeitungssystem, und
   Eingeben oder Berechnen der auszubringenden, konstanten oder standortspezifisch variablen Menge an Material je Flächen- oder Längeneinheit,
   **gekennzeichnet durch** das Berechnen eines im Sinne einer Vergleichmäßigung der aus den einzelnen Behältern (56) zu entnehmenden Mengen an Material optimierten Wegplanes für die Maschine (30) zur Ausbringung des landwirtschaftlichen Materials auf der landwirtschaftlichen Fläche (76).

2. Verfahren nach Anspruch 2, wobei die aus den einzelnen Behältern (56) zu entnehmenden Mengen an Material anhand der im Wegplan für die einzelnen Behälter (56) vorgesehenen Wege und zugehörigen Menge an Material je Flächen- oder Längeneinheit für jeden Behälter für unterschiedliche Kandidatenwege berechnet werden und schließlich ein optimaler Kandidatenweg ausgewählt wird.

3. Verfahren nach Anspruch 1 oder 2, mit dem Schritt des Berechnens einer optimalen Auffüllposition und/oder eines optimalen Auffüllzeitpunkts in dem Fall, dass die Kapazität der Behälter (56) nicht ausreicht, die gesamte landwirtschaftliche Fläche ohne Nachfüllen mit Material zu beaufschlagen.

4. Datenverarbeitungssystem, programmiert zur Ausführung des Verfahrens einer der Ansprüche 1 bis 3.

## Claims

1. Method for creating an optimized route plan for a machine (30) for spreading agricultural material, which machine comprises containers (56) which are arranged next to one another and are each provided with a spreading unit for the material, the said method comprising the following steps using a data processing system:

inputting data relating to an agricultural area (76), on which the material is to be spread, into the data processing system, and
inputting or calculating the constant or site-specifically variable quantity of material to be spread per unit area or length,
**characterized by** calculating a route plan, which is optimized for the purpose of equalizing the quantities of material to be taken from the individual containers (56), for the machine (30) for spreading agricultural material on the agricultural area (76).

2. Method according to Claim 2, wherein the quantities of material to be taken from the individual containers (56) are calculated on the basis of the routes provided in the route plan for the individual containers (56) and associated quantities of material per unit area or length for each container for different candidate routes, and finally an optimum candidate route is selected.

3. Method according to Claim 1 or 2, comprising the step of calculating an optimum filling position and/or an optimum filling time in the event of the capacity of the containers (56) being insufficient to apply material to the entire agricultural area without refilling.

4. Data processing system, programmed for executing the method of one of Claims 1 to 3.

## Revendications

1. Procédé de création d'un plan de trajet optimisé pour une machine (30) destinée à l'épandage de matière agricole, laquelle comporte des récipients (56) disposés les uns à côté des autres et respectivement pourvus d'une unité d'épandage pour la matière, comprenant les étapes suivantes en utilisant un système de traitement de données :

saisie, dans le système de traitement de données, de données concernant une surface agricole (76) sur laquelle est à épandre la matière et saisie ou calcul de la quantité, constante ou variable spécifiquement en fonction du site, de matière à épandre par unité de surface ou de longueur,
**caractérisé par** le calcul d'un plan de trajet, optimisé dans le sens d'une homogénéisation des quantités de matière à prélever des récipients (56) individuels, pour la machine (30) destinée à l'épandage de matière agricole sur la surface agricole (76).

2. Procédé selon la revendication 2, les quantités de matière à prélever des récipients (56) individuels étant calculées à l'aide des trajets prévus dans le plan de trajet pour les récipients (56) individuels et la quantité de matière associée par unité de surface ou de longueur pour chaque récipient pour les différents trajets candidats et un trajet candidat optimal étant finalement sélectionné.

3. Procédé selon la revendication 1 ou 2, comprenant l'étape de calcul d'une position de remplissage optimale et/ou d'un instant de remplissage optimal dans le cas où la capacité des récipients (56) ne suffit pas pour alimenter la totalité de la surface agricole en matière sans remplissage d'appoint.

4. Système de traitement de données, programmé pour mettre en œuvre le procédé selon l'une des revendications 1 à 3.

FIG. 2

FIG. 1

Fig. 4

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6070539 A1
- DE 19532870 A1
- DE 19629618 A1
- DE 102011050885 A1
- US 20160095274 A1
- WO 2014093575 A1
- DE 102014223843 A1
- EP 1522823 A1
- US 20150059630 A1
- EP 2517545 A1
- DE 4223585 A1

**In der Beschreibung aufgeführte Nicht-Patentliteratur**

- **TIMO OKSANEN.** *Dissertation,* Dezember 2007, ht-tp://lib.tkk.fi/Diss/2007/isbn9789512290802/isbn978 9512290802.pdf